# EUROPÄISCHE PATENTSCHRIFT

(11) **EP 1 990 245 B1**
(45) Veröffentlichungstag und Bekanntmachung des Hinweises auf die Patenterteilung: **07.09.2011**
(21) Anmeldenummer: 07009415.6
(22) Anmeldetag: 10.05.2007
(51) Int. Cl.: B60R 21/213, B60R 21/231

(54) **Luftsackanordnung**
Airbag arrangement
Système à sac gonflable

(43) Veröffentlichungstag der Anmeldung: 12.11.2008
(73) Patentinhaber: Autoliv Development AB, 447 83 Vårgårda (SE)
(72) Erfinder: Guthke, Detlev, 58089 Hagen (DE); Maiwald, Helmuth, 51515 Kürten (DE)
(74) Vertreter: Schön, Thilo

(56) Entgegenhaltungen:
- EP-A2- 0 900 704
- DE-A1- 19 647 679
- GB-A- 2 353 977
- GB-A- 2 364 674
- US-A1- 2002 024 204

## Beschreibung

Die Erfindung betrifft eine Luftsackanordnung für Kraftfahrzeuge mit wenigstens einem aufblasbaren Luftsack und zumindest einer Gasleitung, an die der Luftsack angeschlossen und über die der Luftsack mittels eines Gasgenerators aufblasbar ist.

Derartige Luftsackanordnungen sind insbesondere dann von Interesse, wenn der Gasgenerator nicht in unmittelbarer Nähe zum Luftsack angeordnet werden kann oder soll. Durch die zwischen dem Gasgenerator und dem Luftsack vorgesehene Gasleitung ergibt sich prinzipiell eine höhere Flexibilität bei der Konzeption und Montage der Luftsackanordnung im Fahrzeug.

Aus der gattungsgemäßen GB 2 353 977 A ist eine Luftsackanordnung mit einem Gasgenerator, einer Gasleitung und einem aufblasbaren Element bekannt. Die Gasleitung weist eine Erweiterung auf, mit der das aufblasbare Element befüllt wird.

In der DE 196 47 679 A1 ist eine Gassackvorrichtung mit einem Gassackkörper beschrieben, der sich zwischen einer Vordersäule und einer Dachseitenschiene eines Fahrzeugs erstreckt. Die US 2002/024204 A1 beschreibt ein Schutzsystem für Fahrzeuginsassen, das einen Seitengassack umfasst.

Problematisch ist, dass für die Gasleitung zusätzlicher Platz im Fahrzeug benötigt wird. Außerdem ist eine spezielle Anbindungen der Gasleitung an den Luftsack erforderlich, was einen konstruktiven Mehraufwand mit sich bringen und sich nachteilig hinsichtlich der Herstellungskosten auswirken kann.

Aufgabe der Erfindung ist es, eine Luftsackanordnung der eingangs genannten Art derart weiterzubilden, dass sie bei möglichst geringem Aufwand und niedrigen Kosten bei der Herstellung vielseitig einsetzbar und Platz sparend im Fahrzeug montierbar ist.

Die Lösung dieser Aufgabe erfolgt durch die Merkmale des Anspruchs 1.

Erfindungsgemäß ist zwischen der Gasleitung und dem Luftsack eine, insbesondere gasdichte, Verbindung vorgesehen, die von einem Verbindungsabschnitt der Gasleitung und dem Luftsack, insbesondere der Luftsackhülle, gebildet ist. Dabei ist der Verbindungsabschnitte derart, insbesondere flexibel, biegsam und/oder weich, ausgebildet, dass er unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen kann.

Eine derartige, insbesondere flexible, biegsame und/oder weiche Verbindung benötigt im Montagezustand aufgrund ihrer dann zumindest im Wesentlichen flachen und somit gewissermaßen zweidimensionalen Konfiguration extrem wenig Platz. Im Bedarfsfall ergibt sich der erforderliche Strömungsquerschnitt für das Gas durch die Wirkung des Gasgenerators gewissermaßen automatisch von selbst, indem der Gasgenerator die Verbindung aus der flachen Montagekonfiguration in die Aufblaskonfiguration überführt, insbesondere aufbläst, entfaltet, aufdrückt oder aufweitet, was erfindungsgemäß durch die flexible, biegsame und/oder weiche Ausgestaltung des Verbindungsabschnitts ermöglicht wird.

Besonders vorteilhaft kann die erfindungsgemäße Verbindung im Zusammenhang mit einer Gasverteilung eingesetzt werden, die insbesondere in Anwendungen zum Einsatz kommen kann, bei denen mit einem Gasgenerator gleichzeitig zwei Luftsäcke aufgeblasen werden sollen oder - allgemein ausgedrückt - die Anzahl von zur Verfügung stehenden Gasquellen kleiner ist als die Anzahl von im Fahrzeug räumlich getrennt voneinander anzuordnenden Luftsäcken.

Es hat sich überraschend herausgestellt, dass ein von der Erfindung Gebrauch machendes Gasleitungssystem an einen einzigen Gasauslass eines Gasgenerators angeschlossen und dazu verwendet werden kann, das von dem Gasgenerator freigegebene Gas gleichzeitig zwei räumlich voneinander getrennt angeordneten Luftsäcken zuzuführen, um die Luftsäcke gleichzeitig aufzublasen. Dabei wurde gefunden, dass auch bei nicht exakt symmetrischem Aufbau des Gasleitungssystems das von dem Gasgenerator freigegebene Gas im Wesentlichen gleichmäßig auf die beiden Luftsäcke verteilt werden kann. Insbesondere treten keine störenden Effekte dergestalt auf, dass das von dem Gasgenerator freigegebene Gas überwiegend zu lediglich einem der beiden Luftsäcke strömt, was zu einem in der Praxis nicht akzeptierbaren ungleichmäßigen Aufblasen der beiden Luftsäcke führen würde. Dies lässt sich vermutlich auf die hohe Dynamik der beim Auslösen eines Gasgenerators freigegebenen Gasströmung zurückführen.

Ein Vorteil der Erfindung ist, dass die Verbindung zwischen der Gasleitung und dem Luftsack eine Vielzahl von Parametern beinhaltet, die auf einfache Weise bei der Ausgestaltung der Gasleitung bzw. deren Verbindungsabschnitts und des Luftsacks bzw. bei der Herstellung der Verbindung in einer Weise derart variiert werden können, dass sich ein für die jeweiligen Gegebenheiten bzw. Anforderungen optimales Einblas- bzw. Aufblasverhalten ergibt. Hierauf wird an anderer Stelle näher eingegangen.

Vorteilhafte Weiterbildungen der Erfindung sind in den abhängigen Ansprüchen, der Beschreibung sowie der Zeichnung angegeben.

Bevorzugt ragt der Verbindungsabschnitt der Gasleitung in den Luftsack hinein.

Es kann vorgesehen sein, dass zumindest bei aufgeblasenem Zustand ein in den Luftsack hineinragender Bereich der Gasleitung von der Innenseite der Luftsackhülle beabstandet ist.

Bevorzugt ist vorgesehen, dass ein im Inneren des Luftsacks gelegener Bereich des Verbindungsabschnitts als Ventil ausgebildet ist, das unter dem Einfluss des mittels des Gasgenerators freigegebenen Gases zum Aufblasen des Luftsacks einen geöffneten Zustand einnehmen und bei zumindest teilweise aufgeblasenem Luftsack durch eine Druckerhöhung im Inneren des Luftsacks in einen geschlossenen Zustand übergehen kann.

Besonders vorteilhaft wirkt sich diese Ventilfunktion dann aus, wenn bei zumindest teilweise aufgeblasenem Luftsack ein Fahrzeuginsasse den Luftsack beaufschlagt - im Fall eines Seiten- oder "Roof-Rail"-Airbags gemäß einer möglichen Ausgestaltung der Erfindung beispielsweise mit dem Kopf - und sich hierdurch der Druck im Inneren des Luftsacks erhöht. Wenn hierdurch eine Druckdifferenz zwischen dem Inneren des Luftsacks und der Gasleitung bzw. deren Verbindungsabschnitt dergestalt, dass der Druck im Inneren des Luftsacks größer ist als in der Gasleitung bzw. im Verbindungsabschnitt, entsteht, oder wenn eine derartige Druckdifferenz ohnehin bereits vorhanden ist, dann hat das automatische Schließen des von dem Verbindungsabschnitt gebildeten Ventils zur Folge, dass über die Gasleitung kein Gas aus dem Luftsack entweichen kann. Diese Vermeidung von Gasverlusten sorgt auf einfache Weise für eine zuverlässige Aufrechterhaltung der Schutzwirkung des Luftsacks.

Es kann weiter vorgesehen sein, dass ein Gasaustrittsbereich des Verbindungsabschnitts im Inneren des Luftsacks gelegen ist. Bevorzugt ist ein freier Endbereich des Verbindungsabschnitts als Gasaustrittsbereich ausgebildet.

Es kann weiter vorgesehen sein, dass die Gasleitung stirnseitig oder endseitig geschlossen ist.

Vorzugsweise weist die Gasleitung wenigstens eine, insbesondere seitliche, Gasaustrittsöffnung auf. Es kann weiter vorgesehen sein, dass die Gasaustrittsöffnung in Form eines Schlitzes vorgesehen ist. Bevorzugt weist die Gasleitung eine Mehrzahl von Gasaustrittsöffnungen auf.

Es kann weiter vorgesehen sein, dass der Luftsack eine Mehrzahl von Kammern aufweist, wobei jeder Kammer wenigstens eine Gasaustrittsöffnung der Gasleitung zugeordnet ist.

Bevorzugt ist der Luftsack ein Seiten- oder "Roof-Rail"-Airbag, wobei die Verbindung zwischen dem Luftsack und der Gasleitung in einem Bereich des Luftsacks vorgesehen ist, der bei im Fahrzeug montiertem Luftsack im Bereich einer Strebe oder Säule des Fahrzeugs gelegen ist.

Es kann weiter vorgesehen sein, dass der Verbindungsabschnitt von einem Schlauch gebildet ist. Vorzugsweise ist die Gasleitung im Wesentlichen vollständig von einem Schlauch gebildet.

Es kann weiter vorgesehen sein, dass der Verbindungsabschnitt aus einem Gewebe- oder Textilmaterial oder einem, insbesondere flexiblen, biegsamen oder weichen, Kunststoffmaterial hergestellt ist. Bevorzugt ist der Verbindungsabschnitt aus dem gleichen Material wie die Hülle des Luftsacks oder aus einem gleichartigen Material hergestellt.

Es kann weiter vorgesehen sein, dass an die Gasleitung wenigstens zwei im am Fahrzeug montierten Zustand entfernt voneinander angeordnete Luftsäcke angeschlossen sind, wobei vorzugsweise die beiden Luftsäcke über die Gasleitung mittels des Gasgenerators, insbesondere gleichzeitig, aufblasbar sind. Vorzugsweise verbindet die Gasleitung die beiden Luftsäcke miteinander und ist in einem Zwischenabschnitt an den Gasgenerator angeschlossen. Es kann weiter vorgesehen sein, dass die Luftsäcke an einen gemeinsamen Gasauslass des Gasgenerators angeschlossen sind.

Bevorzugt ist die Gasleitung mit dem Luftsack durch Verkleben, Vernähen oder Verschweißen verbunden.

Die Erfindung wird im Folgenden beispielhaft unter Bezugnahme auf die Zeichnung beschrieben, wobei die Fig. 1 bis 5 insbesondere dem Verständnis der Erfindung dienen. Es zeigen:
- Fig. 1: gemäß einem Ausführungsbeispiel zwei flexible Verbindungsabschnitte in noch nicht miteinander verbundenem Zustand jeweils in einer flachen Montagekonfiguration,
- Fig. 2: in verschiedenen Ansichten die Verbindungsabschnitte von Fig. 1 im miteinander verbundenen Zustand, jedoch weiterhin in der flachen Montagekonfiguration,
- Fig. 3: eine perspektivische Ansicht der Verbindung von Fig. 2 in der Aufblaskonfiguration,
- Fig. 4: verschiedene Ansichten der Verbindung von Fig. 3,
- Fig. 5: eine Luftsackanordnung, die von erfindungsgemäßen Verbindungen jeweils zwischen einer Gasleitung und einem Luftsack Gebrauch machen kann, und
- Fig. 6: ein Ausführungsbeispiel einer erfindungsgemäßen Verbindung zwischen einer Gasleitung und einem Luftsack.

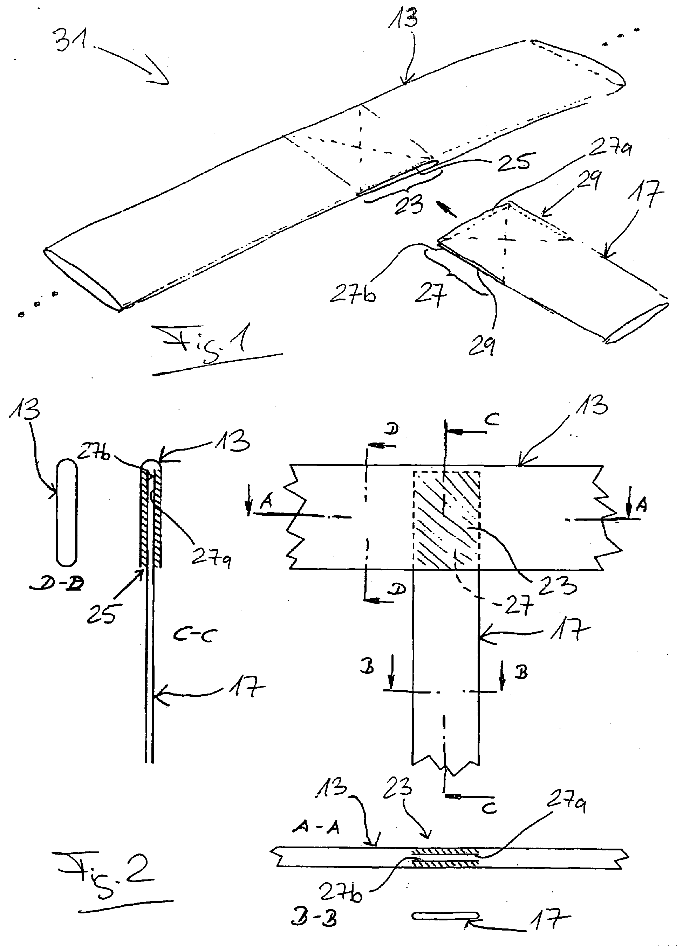

Die Fig. 1 bis 4 illustrieren ein Beispiel eines flexiblen Gasverteilers 31, der von einer Verbindung zwischen zwei flexiblen Verbindungsabschnitten 23, 27 zweier Komponenten einer Luftsackanordnung für Kraftfahrzeuge Gebrauch macht.

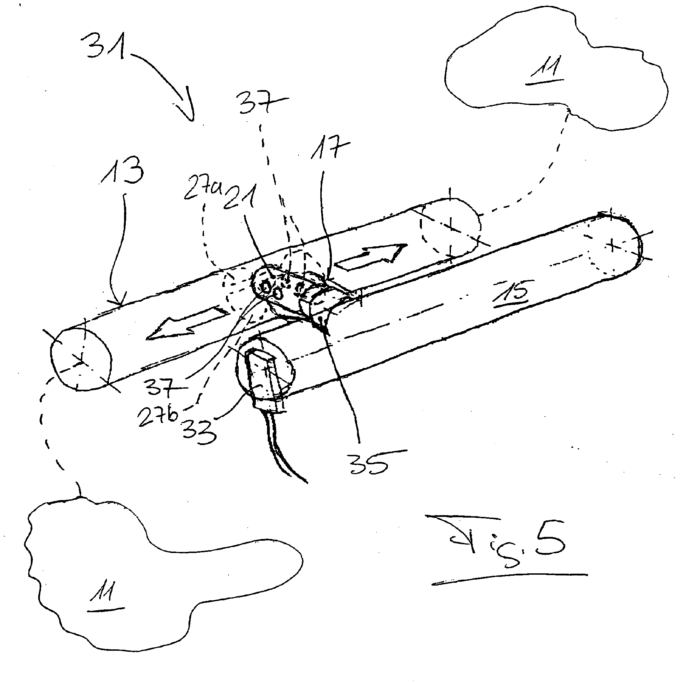

Bei der einen Komponente handelt es sich um eine lediglich teilweise dargestellte Gasleitung 13 z.B. in Form eines Gewebe- oder Textilschlauches, wobei die Gasleitung 13 auch von einem Schlauch oder einer Röhre aus einem ausreichend flexiblen, biegsamen oder weichen Kunststoffmaterial gebildet werden kann. Die andere Komponente 17 ist ebenfalls ein Gewebe-, Textil- oder Kunststoffschlauch, dessen Durchmesser demjenigen der Gasleitung 13 entsprechen oder von diesem abweichen kann. Die Komponente 17 wird im Folgenden auch als Anschlussstück bezeichnet, da sie für die Gasdichtigkeit des Gasverteilers 31 im Bereich der Anbindung eines Gasgenerators 15 (vgl. Fig. 5) an die Gasleitung 13 dient, worauf nachstehend näher eingegangen wird.

Die Hülle oder Wandung der Gasleitung 13 ist mit einer insbesondere durch Einschneiden hergestellten schlitzförmigen Öffnung 25 versehen, die sich hier parallel zu einer Längsachse der Gasleitung 13 erstreckt, wobei auch ein schräger oder senkrechter Verlauf des Schlitzes 25 möglich ist. Zur Herstellung der Verbindung wird in dem hier dargestellten Ausführungsbeispiel ein als Verbindungsabschnitt dienender Endabschnitt 27 des Anschlussstücks 17 in den Schlitz 25 eingeführt, was die in Fig. 2 dargestellte Anordnung zur Folge hat.

Die Länge des Schlitzes 25 ist auf die Breite des Anschlussstücks 17 im flachen, zusammengedrückten Montagezustand gemäß Fig. 1 abgestimmt. Der Endabschnitt 27 ist mit zwei einander gegenüberliegenden, vom offenen Ende des Endabschnitts 27 ausgehenden seitlichen Einschnitten 29 versehen. Durch diese geschlitzte Ausführung des Endabschnitts 27 entstehen zwei lappen- oder laschenartige Wandungsbereiche 27a, 27b. Die Länge der Einschnitte, Schlitze oder Öffnungen 29 des Endabschnitts 27, die hier parallel zur Längsachse des Anschlussstücks 17 verlaufen, wobei aber auch ein schräger oder senkrechter Verlauf möglich ist, ist auf die Breite des Leitungsabschnitts 13 im flachen Montagezustand gemäß Fig. 1 abgestimmt.

Die Schlitze können durch Einschneiden des Materials oder auch durch Materialwegnahme hergestellt werden.

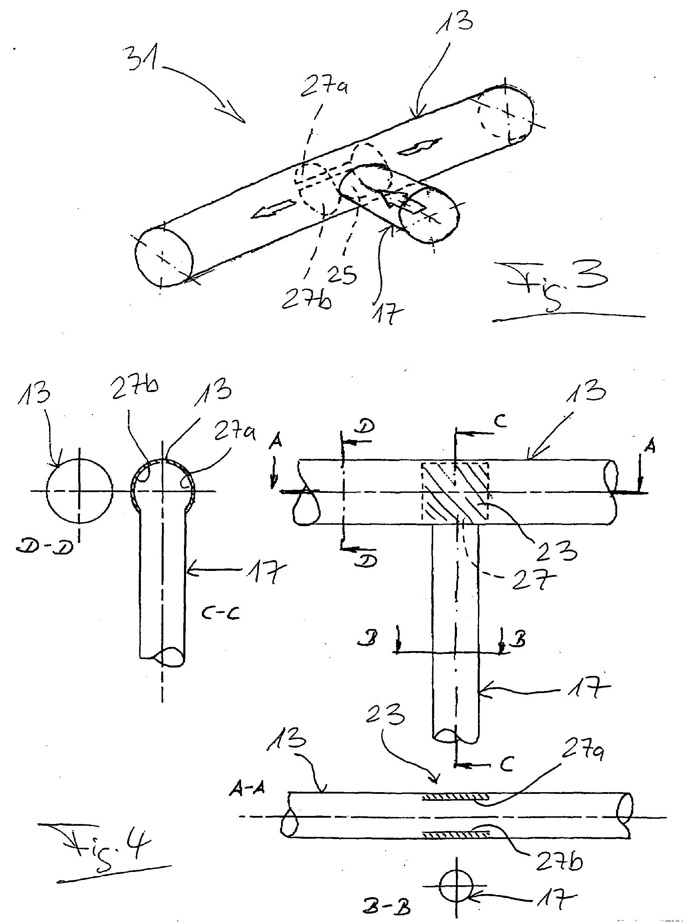

Die Laschen 27a, 27b dienen zur Befestigung des Endabschnitts 27 am Verbindungsabschnitt 23 der Gasleitung 13. Die Befestigung erfolgt beispielsweise durch Verkleben, Vernähen oder Verschleißen. In Fig. 2 und 4 sind z.B. Klebeflächen bzw. das verwendete Klebemittel durch Schraffuren angedeutet. Die Laschen 27a, 27b des Anschlussstücks 17 werden mit ihrer Außenseite an die Innenwand der Gasleitung 13 im Bereich des Verbindungsabschnitts 23 z.B. geklebt. Hierdurch wird eine mechanisch feste und - wie sich herausgestellt hat - ausreichend gasdichte Verbindung zwischen dem Anschlussstück 17 und der Gasleitung 13 erzielt.

Die auf diese Weise gebildete Verbindung bzw. der hierdurch gebildete Gasverteiler 31 erstreckt sich in der Montagekonfiguration gemäß Fig. 1 und 2 praktisch ausschließlich in einer Ebene. Aufgrund der flachen Konfiguration kann der Gasverteiler extrem Platz sparend in einem Fahrzeug verbaut und z.B. in den Fahrzeughimmel integriert werden.

Wird der Gasverteiler 31 von mittels des Gasgenerators 15 freigegebenem Gas durchströmt, gelangt er automatisch in die Aufblaskonfiguration gemäß Fig. 3 und 4, in der das Anschlussstück 17 und die Gasleitung 13 eine röhren- bzw. schlauchförmige Konfiguration einnehmen, die mit ausreichendem Strömungsquerschnitt einen Transport des Gases an einen jeweiligen Zielort ermöglichen. Die innenliegende Anordnung der Befestigungslaschen 27a, 27b hat den Vorteil, dass über das Anschlussstück 17 in die Gasleitung 13 einströmendes Gas an der Innenwand keinen sich in strömungstechnischer Hinsicht nachteilig auswirkenden Hindernissen ausgesetzt ist.

Alternativ zu der in den Fig. 1 bis 4 dargestellten Ausführungsform ist es auch möglich, die Gasleitung 13 mit den beiden Befestigungslaschen 27a, 27b außen zu umgreifen und die Laschen 27a, 27b auf der von dem Anschlussstück 17 abgewandten Seite der Gasleitung 13 beispielsweise durch Verkleben, Vernähen oder Verschweißen miteinander zu verbinden. Auch auf diese Weise lassen sich ein sicherer mechanischer Halt des Anschlussstücks 17 an der Gasleitung 13 sowie ein in strömungstechnischer Hinsicht optimales und gegenüber der Umgebung gasdichtes Kommunizieren zwischen dem Anschlussstück 17 und der Verbindungsöffnung 25 der Gasleitung 13 erzielen.

Fig. 5 zeigt den Gasverteiler 31 zusammen mit zwei schematisch angedeuteten Luftsäcken 11 und einem Gasgenerator 15, der dazu dient, im Bedarfsfall die beiden Luftsäcke 11 gleichzeitig aufzublasen.

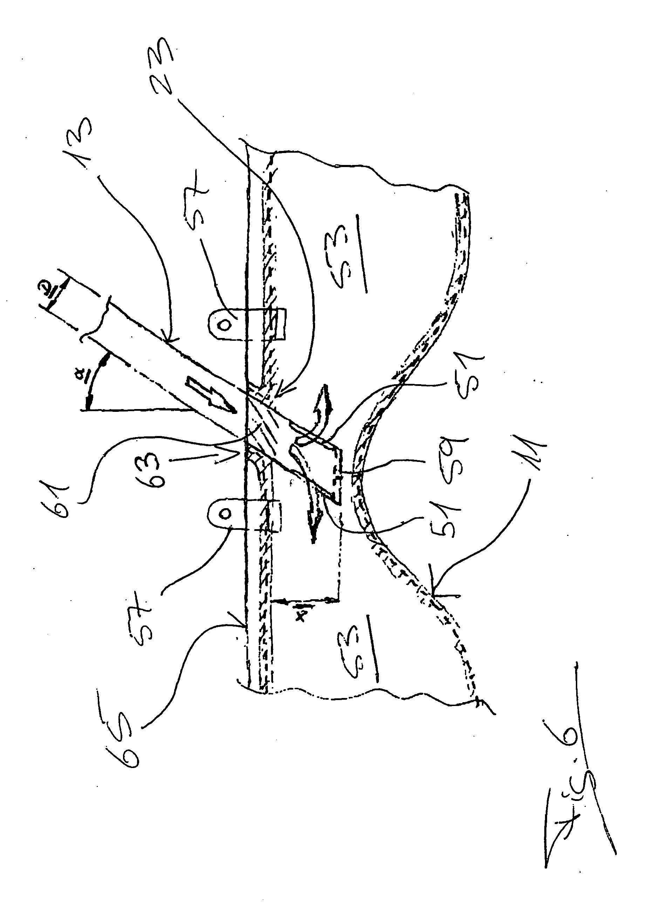

Der die Gasleitung 13 bildende durchgehende flexible Schlauch verbindet die beiden Luftsäcke 11 miteinander. Die hier lediglich schematisch dargestellte Anbindung der Endabschnitte der Gasleitung 13 an die Luftsäcke 11 erfolgt vorzugsweise mittels der erfindungsgemäßen Verbindung, wie sie insbesondere nachstehend anhand der Fig. 6 erläutert wird.

Der Gasgenerator 15 weist einen einzigen Gasauslass auf, von dem ein als Diffusor ausgebildeter Verteilerabschnitt 21 ausgeht. Im Bereich seines Gasaustrittsendes ist der stirnseitig geschlossene Diffusor, insbesondere auf einander diametral gegenüberliegenden Seiten, jeweils mit einer Vielzahl von Gasaustrittsöffnungen 37 versehen, von denen hier der Einfachheit halber jeweils nur zwei dargestellt sind. Die Gasaustrittsöffnungen 37 sind derart ausgerichtet, dass im Ergebnis zwei einander entgegengerichtete Gasströme entstehen. Der Gasgenerator 15 ist hierdurch schubneutral ausgeführt, da nach dem Auslösen des Gasgenerators 15 das Gas aus dem Verteilerabschnitt 21 in einander entgegengesetzte Richtungen austritt.

Der Gasgenerator 15 ist mit seinem Verteilerabschnitt 21 derart in dem flexiblen Gasverteiler 31 angeordnet, dass die Gasaustrittsöffnungen 37 des Diffusors mit der Längsachse der Gasleitung 13 ausgerichtet sind.

Die Gasdichtigkeit der Anbindung des Gasgenerators 15 an die Gasleitung 13 wird durch das Anschlussstück 17 sichergestellt, das über den Verteilerabschnitt 21 gezogen ist und generatorseitig mittels einer Dichtschelle 35 gasdicht am Verteilerabschnitt 21 bzw. am Gasauslass des Gasgenerators 15 anliegt.

Das gleichzeitige Aufblasen der beiden Luftsäcke 11 erfolgt dadurch, dass im Bedarfsfall der bevorzugt als so genannter Kaltgasgenerator ausgebildete Gasgenerator 15 mit einem Auslösesignal beaufschlagt wird, was über einen elektrischen Anschluss 33 erfolgt. Hierdurch wird ein innerhalb des Gasgenerators 15 befindlicher Treibsatz gezündet, mit letztlich eine vorhandene, unter hohem Druck stehende Gasmenge freigibt, so dass das Gas schlagartig über den Gasauslass und den Diffusor 21 durch die Gasaustrittsöffnungen 37 nach außen strömt. Über die Gasleitung 13 wird hierbei somit beiden Luftsäcken 11 gleichzeitig das mittels des Gasgenerators 15 freigegebene Gas zugeführt. Die beiden Luftsäcke 11 sind also gerade nicht an verschiedene Gasauslässe eines Gasgenerators angeschlossen, die unabhängig voneinander und insbesondere zeitlich nacheinander mit Gas beaufschlagt werden können. Vielmehr zeichnet sich die Luftsackanordnung hier dadurch aus, dass mit einem einzigen Treibsatz und einer einzigen "Gasladung", d.h. somit gewissermaßen "auf einen Schlag", beide Luftsäcke 11 gleichzeitig mit Gas gefüllt werden. Der Einsatz reiner pyrotechnischer Gasgeneratoren oder so genannter Hybrid-Gasgeneratoren ist ebenfalls möglich. Die Verwendung von Kaltgas, das z.B. Helium umfasst, wird als vorteilhaft insofern angesehen, als durch Hitzeeinwirkung bedingte Nachteile vermieden werden und ein besseres dynamisches Verhalten hinsichtlich der Gasströmung erzielt werden kann.

In einer alternativen Ausgestaltung ist es auch möglich, dass ein einziger, mittels eines einzigen Auslösesignals über den Anschluss 33 zündbarer Treibsatz ein Gasvolumen freigegeben, das gleichzeitig über zwei oder mehrere Gasauslässe aus dem Gasgenerator 15 austritt und durch entsprechende Ausbildung einer gemeinsamen oder geteilten Diffusoranordnung gleichzeitig zwei an eine gemeinsame oder jeweils an eine eigene Gasleitung angeschlossene Luftsäcke 11 aufbläst. Auch eine solche Ausgestaltung im Rahmen dieser Anmeldung als ein gemeinsamer oder einziger Gasauslass des Gasgenerators angesehen.

Wie im Einleitungsteil erwähnt, kann auch der Verteilerabschnitt bzw. Diffusor 21 und insbesondere der gesamte innerhalb des flexiblen Verteilers 31 befindliche Abschnitt des Gasgenerators 15 derart verformbar ausgebildet sein, dass nach dem Auslösen des Gasgenerators 15 das ausströmende Gas den insbesondere aus Metall bestehenden Diffusor 21 bzw. den erwähnten gesamten Abschnitt aus einer Platz sparenden zusammengedrückten Einbaukonfiguration in eine Aufblaskonfiguration mit vergrößertem Strömungsquerschnitt überführt, gewissermaßen also entfaltet oder aufdrückt. Mit Ausnahme des Gasgenerators 15 selbst ist somit das gesamte Gasleitungssystem aus Diffusor 21, Anschlussstück 17 und Gasleitung 13 im Ausgangszustand von flächiger Gestalt, was den Platzbedarf innerhalb des Fahrzeugs minimiert.

Besonders vorteilhaft ist die Erfindung in Luftsackanordnungen einsetzbar, die zwei räumlich getrennt anzuordnende Seiten- oder "Roof-Rail"-Airbags aufweisen, welche jeweils im Ausgangszustand im Bereich des Übergangs zwischen Fahrzeugdach und Fahrzeugseitenwand angeordnet sind und sich vorhangartig nach unten entfalten können, um für die Insassen einen sich über eine relevante Länge der Fahrzeugs erstreckenden Seitenschutz zu bilden. Derartige Seitenairbags werden derzeit jeweils mit einem eigenen Gasgenerator versehen, was relativ hohe Herstellungskosten bedeutet und außerdem deshalb als störend empfunden wird, da der Gasgenerator im Bereich des Übergangs zwischen Fahrzeugdach und Fahrzeugseitenwand in den meisten Fällen nur so montiert werden kann, dass er in das Fahrzeuginnere hineinragt.

Da mit der Erfindung ein flach bauendes, im Montagezustand nicht auftragendes Gasleitungssystem realisierbar ist, kann in dem hier geschilderten Anwendungsfall eine Anordnung beispielsweise gemäß Fig. 5 mit einem einzigen Gasgenerator vorgesehen werden, der über eine Gasleitung gleichzeitig beide Seitenairbags versorgt. Die im Montagezustand flache Gasleitung kann einfach in den Fahrzeughimmel integriert und somit am Fahrzeugdach entlang geführt werden. Für den Gasgenerator kann in diesem Fall eine bezüglich der Fahrzeugquerrichtung mittige Anordnung beispielsweise an einem hinteren Querträger vorgesehen werden. Dieser Einbauort ermöglicht es, ein Hineinragen des Gasgenerators in den Fahrzeugraum zu vermeiden. Die Reduzierung auf lediglich einen Gasgenerator und damit lediglich eine Anschlusselektrik und Auslöseelektronik führt zu einer erheblichen Senkung der Herstellungskosten.

Fig. 6 zeigt eine erfindungsgemäße Verbindung zwischen einer Gasleitung 13 und einem Luftsack 11, bei dem es sich um einen Seiten- oder "Roof-Rail"-Airbag handelt. Die Gasleitung 13 ist - z.B. entsprechend der Anordnung in Fig. 5 - ein Schlauch aus Gewebe-, Textil- oder Kunststoffmaterial und ragt mit einem Verbindungsabschnitt 23 über eine im Luftsack 11 ausgebildete, einen stutzen- oder mundstückartigen Anschlussbereich 63 für die Gasleitung 13 bildende und von einer Naht 59 definierte oder verstärkte Öffnung in das Innere des Luftsacks 11 hinein. Die Öffnung ist in einem zwischen zwei Befestigungslaschen 57 gelegenen Bereich des Luftsacks 11 ausgebildet, die dazu dienen, den Luftsack 11 am Fahrzeug zu befestigen. Eine mechanisch feste Verbindung, die ein Herausziehen der Gasleitung 13 aus dem Luftsack verhindert, wird z.B. durch Verkleben, Vernähen oder Verschweißen hergestellt. Der Befestigungsbereich 61 ist in Fig. 6 durch eine Schraffur angedeutet.

Die Einsteck- oder Einführöffnung im Luftsack 11 für die Gasleitung 13 bzw. den Verbindungsabschnitt 23 ist insbesondere schlitzförmig ausgebildet. Es hat sich gezeigt, dass bei entsprechender Abstimmung der betreffenden Abmessungen hierdurch bereits eine ausreichende Gasdichtigkeit des Luftsackinneren gegenüber der Umgebung gewährleistet werden kann. Zusätzlich können jedoch geeignete Abdichtmaßnahmen getroffen werden.

Alternativ kann nur der die Verbindung mit dem Luftsack 11 herstellende Verbindungsabschnitt 23 der Gasleitung 13 als Schlauch bzw. flexibel, biegsam und/oder weich im Sinne der Erfindung ausgebildet sein, während der Rest der Gasleitung zumindest teilweise von einem starren Rohr gebildet ist. Bevorzugt ist allerdings die Gasleitung 13 vollständig als Schlauch ausgeführt.

Die in das Luftsackinnere hineinragende Gasleitung 13 weist im Bereich ihres im Inneren gelegenen freien Endes einen Ausström- bzw. Einblasbereich auf. Stirnseitig ist die Gasleitung 13 durch eine Naht 59 geschlossen, die schräg zur Längsachse der Gasleitung 13 verläuft, und zwar entsprechend einem Winkel α, unter welchem die Gasleitung 13 bzw. deren Verbindungsabschnitt 23 schräg zu einer Bezugsseite 65 des Luftsacks 11 in diesen einläuft. Dieser Einlaufwinkel α kann beliebig variiert werden. Alternativ kann die Abschrägung am freien Ende der Gasleitung 13 unabhängig von dem Einlaufwinkel α variiert und an die jeweiligen Anforderungen angepasst werden.

Der Einblasbereich ist mit zwei einander etwa gegenüberliegenden seitlichen Öffnungen 51 versehen, die hier in Form von Schlitzen vorgesehen sind. Anzahl, Position und Form der Öffnungen 51 können beliebig variiert werden.

In dem dargestellten Beispiel sind die Öffnungen 51 jeweils einer im Luftsack 11 vorgesehenen Kammer 53 zugeordnet. Durch spezifische Ausgestaltung der Öffnungen 51 kann das Aufblasverhalten der Kammern 53 untereinander gezielt vorgegeben bzw. zumindest mitbestimmt werden.

Alternativ kann das stirnseitige Ende der Gasleitung 13 auch zumindest teilweise geöffnet sein, wobei zusätzlich eine oder mehrere seitliche Austrittsöffnungen von grundsätzlich beliebigem Querschnitt vorgesehen sein können.

Ist oder wird der Druck innerhalb des Luftsacks 11 größer als in der Gasleitung 13 oder deren Verbindungsabschnitt 23, so kann kein Gas aus dem Luftsack 11 über die Gasleitung 13 entweichen, da sich in einer solchen Situation der mit der wenigstens einen Gasaustrittsöffnung 51 versehene Einblasbereich des Verbindungsabschnitts 23 verschließt. Auf die im Einleitungsteil erläuterten Vorteile dieser mit der Erfindung verbundenen Ventilfunktion wird hiermit verwiesen.

Die Gasleitung 13 ragt mit ihrem Verbindungsabschnitt 23 bis in eine bestimmte, vorgebbare Tiefe in den Luftsack 11 hinein, die - senkrecht zu der Bezugsseite 65 gemessen - in Fig. 6 mit x bezeichnet ist. Auch diese Eindringtiefe ist ein Parameter, der verändert werden kann.

Zur Anpassung an die jeweiligen Gegebenheiten bzw. Anforderungen kann außerdem der Durchmesser D der Gasleitung 13 bzw. deren Verbindungsabschnitts 23 verändert werden, was insbesondere mit einer entsprechenden Veränderung der Einstecköffnung im Luftsack 11 einhergehen kann.

Wie bereits erwähnt, ist ein Vorteil der erfindungsgemäßen Verbindung zwischen Gasleitung 13 und Luftsack 11, dass sich auf besonders einfache Weise das Einblas- oder Aufblasverhalten des Luftsacks 11 z.B. dadurch beeinflussen lässt, dass ein oder mehrere der vorstehend erwähnten Parameter variiert werden.

### Bezugszeichenliste

- 11: Luftsack
- 13: Gasleitung
- 15: Gasgenerator
- 17: Anschlussstück
- 21: Verteilerabschnitt, Diffusor
- 23: Verbindungsabschnitt der Gasleitung, Zwischenabschnitt
- 25: Öffnung, Schlitz
- 27: Verbindungsabschnitt des Anschlussstücks, Endabschnitt
- 27a: Wandungsbereich, Befestigungslasche
- 27b: Wandungsbereich, Befestigungslasche
- 29: seitliche Öffnung, Schlitz
- 31: Gasverteiler
- 33: elektrischer Anschluss
- 35: Dichtschelle
- 37: Gasaustrittsöffnung

- 51: Gasaustrittsöffnung
- 53: Kammer
- 57: Befestigungslasche
- 59: Naht
- 61: Befestigungsbereich
- 63: Anschlussbereich des Luftsacks
- 65: Bezugsseite

## Patentansprüche

1. Luftsackanordnung für Kraftfahrzeuge mit
wenigstens einem aufblasbaren Luftsack (11) und
zumindest einer Gasleitung (13), an die der Luftsack (11) angeschlossen und über die der Luftsack (11) mittels eines, insbesondere im am Fahrzeug montierten Zustand entfernt von dem Luftsack (11) angeordneten, Gasgenerators (15) aufblasbar ist, **dadurch gekennzeichnet, dass**
zwischen der Gasleitung (13) und dem Luftsack (11) eine Verbindung besteht, die von einem Verbindungsabschnitt (23) der Gasleitung (13) und dem Luftsack (11), insbesondere der Luftsackhülle, gebildet ist,
wobei der Verbindungsabschnitt (23) derart, insbesondere flexibel, biegsam und/oder weich, ausgebildet ist, dass er unter dem Einfluss von mittels des Gasgenerators (15) freigegebenem Gas aus einer, insbesondere flachen, Montagekonfiguration in eine Aufblaskonfiguration mit gegenüber der Montagekonfiguration vergrößertem Strömungsquerschnitt gelangen kann.

2. Luftsackanordnung nach Anspruch 1,
**dadurch gekennzeichnet,**
**dass** der Verbindungsabschnitt (23) der Gasleitung (13) in den Luftsack (11) hineinragt.

3. Luftsackanordnung nach Anspruch 1 oder 2,
**dadurch gekennzeichnet,**
**dass** zumindest bei aufgeblasenem Zustand ein in den Luftsack (11) hineinragender Bereich der Gasleitung (13) von der Innenseite der Luftsackhülle beabstandet ist.

4. Luftsackanordnung nach einem der vorhergehenden Ansprüche,
**dadurch gekennzeichnet,**
**dass** ein im Inneren des Luftsacks (11) gelegener Bereich des Verbindungsabschnitts (23) als Ventil ausgebildet ist, das unter dem Einfluss des mittels des Gasgenerators (15) freigegebenen Gases zum Aufblasen des Luftsacks (11) einen geöffneten Zustand einnehmen und bei zumindest teilweise aufgeblasenem Luftsack (11) durch eine Druckerhöhung im Inneren des Luftsacks (11) in einen geschlossenen Zustand übergehen kann.

5. Luftsackanordnung nach einem der vorhergehenden Ansprüche,
**dadurch gekennzeichnet,**
**dass** ein Gasaustrittsbereich des Verbindungsabschnitts (23) im Inneren des Luftsacks (11) gelegen ist.

6. Luftsackanordnung nach einem der vorhergehenden Ansprüche,
**dadurch gekennzeichnet,**
**dass** ein freier Endbereich des Verbindungsabschnitts (23) als Gasaustrittsbereich ausgebildet ist.

7. Luftsackanordnung nach einem der vorhergehenden Ansprüche,
**dadurch gekennzeichnet,**
**dass** die Gasleitung (13) stirnseitig oder endseitig geschlossen ist.

8. Luftsackanordnung nach einem der vorhergehenden Ansprüche,
**dadurch gekennzeichnet,**
**dass** die Gasleitung (13) wenigstens eine, insbesondere seitliche, Gasaustrittsöffnung (51) aufweist.

9. Luftsackanordnung nach Anspruch 8,
**dadurch gekennzeichnet,**
**dass** die Gasaustrittsöffnung (51) in Form eines Schlitzes vorgesehen ist.

10. Luftsackanordnung nach einem der vorhergehenden Ansprüche,
**dadurch gekennzeichnet,**
**dass** die Gasleitung (13) eine Mehrzahl von Gasaustrittsöffnungen (51) aufweist.

11. Luftsackanordnung nach einem der vorhergehenden Ansprüche,
**dadurch gekennzeichnet,**
**dass** der Luftsack (11) eine Mehrzahl von Kammern (53, 55) aufweist, wobei jeder Kammer (53, 55) wenigstens eine Gasaustrittsöffnung (51) der Gasleitung (13) zugeordnet ist.

12. Luftsackanordnung nach einem der vorhergehenden Ansprüche,
**dadurch gekennzeichnet,**
**dass** der Luftsack (11) ein Seiten- oder "Roof-Rail"-Airbag ist, wobei die Verbindung zwischen dem Luftsack (11) und der Gasleitung (13) in einem Bereich des Luftsacks (11) vorgesehen ist, der bei im Fahrzeug montiertem Luftsack (11) im Bereich einer Strebe oder Säule des Fahrzeugs gelegen ist.

13. Luftsackanordnung nach einem der vorhergehenden Ansprüche,
**dadurch gekennzeichnet,**
**dass** der Verbindungsabschnitt (23) von einem Schlauch gebildet ist.

14. Luftsackanordnung nach einem der vorhergehenden Ansprüche,
**dadurch gekennzeichnet,**
**dass** die Gasleitung (13) im Wesentlichen vollständig von einem Schlauch gebildet ist.

15. Luftsackanordnung nach einem der vorhergehenden Ansprüche,
**dadurch gekennzeichnet,**
**dass** der Verbindungsabschnitt (23) aus einem Gewebe- oder Textilmaterial oder einem, insbesondere flexiblen, biegsamen oder weichen, Kunststoffmaterial hergestellt ist.

16. Luftsackanordnung nach einem der vorhergehenden Ansprüche,
**dadurch gekennzeichnet,**
**dass** der Verbindungsabschnitt (23) aus dem gleichen Material wie die Hülle des Luftsacks (11) oder aus einem gleichartigen Material hergestellt ist.

17. Luftsackanordnung nach einem der vorhergehenden Ansprüche,
**dadurch gekennzeichnet,**
**dass** an die Gasleitung (13) wenigstens zwei im am Fahrzeug montierten Zustand entfernt voneinander angeordnete Luftsäcke (11) angeschlossen sind, wobei vorzugsweise die beiden Luftsäcke (11) über die Gasleitung (13) mittels des Gasgenerators (15), insbesondere gleichzeitig, aufblasbar sind.

18. Luftsackanordnung nach Anspruch 17,
**dadurch gekennzeichnet,**
**dass** die Gasleitung (13) die beiden Luftsäcke (11) miteinander verbindet und in einem Zwischenabschnitt (23) an den Gasgenerator (15) angeschlossen ist.

19. Luftsackanordnung nach Anspruch 17 oder 18,
**dadurch gekennzeichnet,**
**dass** die Luftsäcke (11) an einen gemeinsamen Gasauslass des Gasgenerators (15) angeschlossen sind.

20. Luftsackanordnung nach einem der vorhergehenden Ansprüche,
**dadurch gekennzeichnet,**
**dass** die Gasleitung (13) mit dem Luftsack (11) durch Verkleben, Vernähen und/oder Verschweißen verbunden ist.

## Claims

1. An airbag arrangement for motor vehicles, comprising at least one inflatable airbag (11) and at least one gas supply line (13) to which the airbag (11) is connected and by which means the airbag (11) can be inflated by a gas generator (15) which is arranged at a distance from the airbag (11) especially when the arrangement is mounted in the vehicle, **characterized in that** there is a connection between the gas supply line (13) and the airbag (11) which is formed by a connection section (23) of the gas supply line (13) and the airbag (11), especially the airbag cover, the connection section (23) being especially flexible, pliant and/or soft such that, when subjected to the gas released by means of the gas generator (15), the connection can change from an essentially flat assembled embodiment into an inflated embodiment with a larger flow cross-section than that of the assembled embodiment.

2. The airbag arrangement according to claim 1, **characterized in that** the connection section (23) of the gas supply line (13) extends into the airbag (11).

3. The airbag arrangement according to claim 1 or 2, **characterized in that** at least in an inflated state a portion of the gas supply line (13) extending into the airbag (11) is at a distance from the inner side of the airbag cover.

4. The airbag arrangement according to any one of the preceding claims, **characterized in that** a portion of the connection section (23) located inside the airbag (11) is formed as a valve which, when subjected to the gas released by means of the gas generator (15), can assume an opened state for inflating the airbag (11) and change into a closed state when the airbag (11) is at least partly inflated by increasing the pressure inside the airbag (11).

5. The airbag arrangement according to any one of the preceding claims, **characterized in that** a gas outlet portion of the connection section (23) is located inside the airbag (11).

6. The airbag arrangement according to any one of the preceding claims, **characterized in that** a free end portion of the connection section (23) is formed as a gas outlet portion.

7. The airbag arrangement according to any one of the preceding claims, **characterized in that** the gas supply line (13) is closed at the front side or at the end side.

8. The airbag arrangement according to any one of the preceding claims, **characterized in that** the gas supply line (13) has at least one gas outlet opening (51), especially a lateral gas outlet opening (51).

9. The airbag arrangement according to claim 8, **characterized in that** the gas outlet opening (51) is provided in the shape of a slot.

10. The airbag arrangement according to any one of the preceding claims, **characterized in that** the gas supply line (13) has a plurality of gas outlet openings (51).

11. The airbag arrangement according to any one of the preceding claims, **characterized in that** the airbag (11) has a plurality of chambers (53, 55), each chamber (53, 55) being assigned at least one gas outlet opening (51) of the gas supply line (13).

12. The airbag arrangement according to any one of the preceding claims, **characterized in that** the airbag (11) is a side or "roof rail" airbag, the connection between the airbag (11) and the gas supply line (13) being provided in a portion of the airbag (11) that in a vehicle-mounted airbag (11) is located in the area of a strut or pillar of the vehicle.

13. The airbag arrangement according to any one of the preceding claims, **characterized in that** the connection section (23) is formed by a hose.

14. The airbag arrangement according to any one of the preceding claims, **characterized in that** the gas supply line (13) is essentially completely formed by a hose.

15. The airbag arrangement according to any one of the preceding claims, **characterized in that** the connection section (23) is made from a fabric or textile material or a plastic material that is especially flexible, pliant or soft.

16. The airbag arrangement according to any one of the preceding claims, **characterized in that** the connection section (23) is made from the same material as the cover of the airbag (11) or a material of the same kind.

17. The airbag arrangement according to any one of the preceding claims, **characterized in that** at least two airbags (11) disposed apart from each other in a vehicle-mounted state are connected to the gas supply line (13), the two airbags (11) being preferably inflatable, in particular simultaneously, via the gas supply line (13) by means of the gas generator (15).

18. The airbag arrangement according to claim 17, **characterized in that** the gas supply line (13) connects the two airbags (11) to each other and is connected to the gas generator (15) in an intermediate section (23).

19. The airbag arrangement according to claim 17 or 18, **characterized in that** the airbags (11) are connected to a common gas outlet of the gas generator (15).

20. The airbag arrangement according to any one of the preceding claims, **characterized in that** the gas supply line (13) is connected to the airbag (11) by gluing, sewing and/or welding.

## Revendications

1. Système à sac gonflable pour des véhicules automobiles avec au moins un sac gonflable (11) et au moins une conduite de gaz (13), à laquelle est raccordé le sac gonflable (11) et via laquelle le sac gonflable (11) peut être gonflé à l'aide d'un générateur à gaz (15) disposé en particulier à distance du sac gonflable (11) à l'état monté sur le véhicule, **caractérisé en ce qu'**il existe une liaison entre la conduite de gaz (13) et le sac gonflable (11), laquelle est formée d'une section de liaison (23) de la conduite de gaz (13) et du sac gonflable (11), en particulier de l'enveloppe de sac gonflable,
sachant que la section de liaison (23) est réalisée en particulier de manière flexible, souple et/ou molle de telle manière qu'elle puisse parvenir sous l'influence du gaz libéré à l'aide du générateur à gaz (15) d'une configuration de montage en particulier plane à une configuration de gonflage avec une section de passage agrandie par rapport à la configuration de montage.

2. Système à sac gonflable selon la revendication 1, **caractérisé en ce que** la section de liaison (23) de la conduite de gaz (13) pénètre dans le sac gonflable (11).

3. Système à sac gonflable selon la revendication 1 ou 2, **caractérisé en ce qu'**au moins à l'état gonflé, une zone pénétrant dans le sac gonflable (11) de la conduite de gaz (13) est espacée du côté intérieur de l'enveloppe de sac gonflable.

4. Système à sac gonflable selon l'une quelconque des revendications précédentes, **caractérisé en ce qu'**une zone placée à l'intérieur du sac gonflable (11) de la section de liaison (23) est réalisée comme une soupape qui peut adopter un état ouvert sous l'influence du gaz libéré par le générateur à gaz (15) pour le gonflage du sac gonflable (11) et peut passer à un état fermé par une augmentation de pression à l'intérieur du sac gonflable (11) lorsque le sac gonflable (11) est gonflé au moins en partie.

5. Système à sac gonflable selon l'une quelconque des revendications précédentes, **caractérisé en ce qu'**une zone de sortie de gaz de la section de liaison (23) est placée à l'intérieur du sac gonflable (11).

6. Système à sac gonflable selon l'une quelconque des revendication précédentes, **caractérisé en ce qu'**une zone d'extrémité libre de la section de liaison (23) est réalisée comme une zone de sortie de gaz.

7. Système à sac gonflable selon l'une quelconque des revendications précédentes, **caractérisé en ce que** la conduite de gaz (13) est fermée côté avant ou côté extrémité.

8. Système à sac gonflable selon l'une quelconque des revendications précédentes, **caractérisé en ce que** la conduite de gaz (13) présente au moins une ouverture de sortie de gaz (51) en particulier latérale.

9. Système à sac gonflable selon la revendication 8, **caractérisé en ce que** l'ouverture de sortie de gaz (51) est prévue sous la forme d'une fente.

10. Système à sac gonflable selon l'une quelconque des revendications précédentes, **caractérisé en ce que** la conduite de gaz (13) présente une pluralité d'ouvertures de sortie de gaz (51).

11. Système à sac gonflable selon l'une quelconque des revendications précédentes, **caractérisé en ce que** le sac gonflable (11) présente une pluralité de chambres (53, 55), sachant qu'à chaque chambre (53, 55) est associée au moins unc ouverture de sortie de gaz (51) de la conduite de gaz (13).

12. Système à sac gonflable selon l'une quelconque des revendications précédentes, **caractérisé en ce que** le sac gonflable (11) est un airbag latéral ou « Roof-Rail », sachant que la liaison entre le sac gonflable (11) et la conduite de gaz (13) est prévue dans une zone du sac gonflable (11) placée dans la zone d'une entretoise ou d'un montant du véhicule lorsque le sac gonflable (11) est monté dans le véhicule.

13. Système à sac gonflable selon l'une quelconque des revendications précédentes, **caractérisé en ce que** la section de liaison (23) est formée par un tuyau.

14. Système à sac gonflable selon l'une quelconque des revendication précédentes, **caractérisé en ce que** la conduite de gaz (13) est formée essentiellement complètement par un tuyau.

15. Système à sac gonflable selon l'une quelconque des revendications précédentes, **caractérisé en ce que** la section de liaison (23) est fabriquée en un matériau de tissu ou textile ou en un matériau synthétique en particulier flexible, souple ou mou.

16. Système à sac gonflable selon l'une quelconque des revendications précédentes, **caractérisé en ce que** la section de liaison (23) est fabriquée dans le même matériau que l'enveloppe du sac gonflable (11) ou en un matériau semblable.

17. Système à sac gonflable selon l'une quelconque des revendications précédentes, **caractérisé en ce qu'**au moins deux sacs gonflables (11) disposés à distance l'un de l'autre à l'état monté sur le véhicule sont raccordés à la conduite de gaz (13), sachant que de préférence les deux sacs gonflables (11) peuvent être gonflés par la conduite de gaz (13) au moyen du générateur à gaz (15), en particulier en même temps.

18. Système à sac gonflable selon la revendication 17, **caractérisé en ce que** la conduite de gaz (13) relie entre eux les deux sacs gonflables (11) et est raccordée dans une section intermédiaire (23) au générateur à gaz (15).

19. Système à sac gonflable selon la revendication 17 ou 18, **caractérisé en ce que** les sacs gonflables (11) sont raccordés à une sortie de gaz commune du générateur à gaz (15).

20. Système à sac gonflable selon l'une quelconque des revendications précédentes, **caractérisé en ce que** la conduite de gaz (13) est reliée au sac gonflable (11) par collage, couture et/ou soudure.
